# DEMANDE DE BREVET EUROPEEN

(11) **EP 0 856 493 A1**
(43) Date de publication de la demande: **05.08.1998**
(21) Numéro de dépôt: 98400185.9
(22) Date de dépôt: 29.01.1998
(51) Int. Cl.: C03B 5/00, C03B 1/00, C03B 3/02, B09B 3/00, C10B 49/10, F23G 5/027, F23G 5/033, F23G 5/16, F23G 5/30, F23G 7/00

(54) **Installation de valorisation énergétique de déchets urbains et assimilés**

(30) Priorité: 30.01.1997 FR 9700993
(71) Demandeur: GEC ALSTHOM Stein Industrie, 78140 Velizy-Villacoublay (FR)
(72) Inventeur: Morin, Jean-Xavier, 45170 Neuville Aux Bois (FR); Peyrelongue, Jean-Pierre, 78600 Pontchartrain (FR)
(74) Mandataire: Fournier, Michel

(57) **Abrégé**

La présente invention concerne une installation de valorisation énergétique de déchets urbains et assimilés comportant
- un dispositif de broyage (1) des déchets dont les refus sont évacués,
- un réacteur à lit fluidisé circulant (2) recevant les déchets broyés par une conduite d'alimentation et comportant un lit fluidisé dense latéral situé sur la paroi du réacteur comportant la conduite d'alimentation en déchets broyés, un conduit d'extraction des éléments lourds non fluidisables étant situé à la base de ce lit fluidisé dense latéral et amènant ceux-ci dans un dispositif trieur de grosses particules (3) refroidissant ces éléments et extrayant les matières inertes non fluidisables, les autres matières étant réintroduites dans le réacteur (2),
- un agencement de récupération d'énergie et de traitement des fumées sortant dudit réacteur (2).

Selon l'invention, au moins une partie desdits refus sont introduits dans ledit dispositif trieur de grosses particules (3).

## Description

La présente invention concerne une installation de valorisation énergétique de déchets urbains et assimilés.

Elle concerne plus précisément une installation de valorisation énergétique de déchets urbains et assimilés comportant
- un dispositif de broyage des déchets dont les refus sont évacués,
- un réacteur à lit fluidisé circulant recevant les déchets broyés par une conduite d'alimentation et comportant un lit fluidisé dense latéral situé sur la paroi du réacteur comportant la conduite d'alimentation en déchets broyés, un conduit d'extraction des éléments lourds non fluidisables étant situé à la base de ce lit fluidisé dense latéral et amènant ceux-ci dans un dispositif trieur de grosses particules refroidissant ces éléments et extrayant les matières inertes non fluidisables, les autres matières étant réintroduites dans le réacteur,
- un agencement de récupération d'énergie et de traitement des fumées sortant dudit réacteur.

Un tel réacteur est divulgué dans le document de brevet FR- 2 735 041. Il comporte donc un premier lit fluidisé dense latéral situé sur la paroi du réacteur comportant la conduite d'alimentation en déchets broyés et où se produit une gazéification des déchets broyés et un second lit fluidisé dense latéral équipé d'un surchauffeur. Un conduit d'extraction des éléments lourds non fluidisables est situé à la base du premier lit fluidisé dense latéral et amène ceux-ci dans un dispositif trieur de grosses particules refroidissant ces éléments et extrayant les matières inertes non fluidisables, les autres matières étant réintroduites dans le réacteur.

Par ailleurs, les refus évacués du dispositif de broyage doivent être traités pour devenir recyclables. Il doivent être stockés en décharge de classe 2, ce qui représente un traitement coûteux.

L'invention résout ce problème et pour ce faire, selon l'invention, au moins une partie desdits refus sont introduits dans ledit dispositif trieur de grosses particules.

Ces matières introduites dans le trieur de grosses particules assurent le refroidissement des éléments lourds non fluidisables provenant du réacteur. Ils subissent en contrepartie un traitement thermique à une température de l'ordre de 400 à 500°C qui les nettoie des matières organiques et les rend directement recyclables en sortie du dispositif trieur de grosses particules, sans dépense d'énergie et donc sans diminution du rendement global de l'installation.

Selon un mode de réalisation préféré, l'installation comporte un dispositif de tri où lesdits refus sont triés en un premier flux de matières inertes peu polluées en matières organiques et en un second flux de matières inertes polluées en matières organiques ou d'éléments lourds combustibles.

Dans ce cas, avantageusement, ledit premier flux de matières inertes est introduit dans ledit dispositif trieur de grosses particules.

Avantageusement,
- ledit réacteur est équipé d'un dispositif trieur de fines particules connecté à sa base,
- l'installation comporte un broyeur cribleur dans lequel est introduit ledit second flux,
- les fines particules produites par le broyeur cribleur sont introduites dans le dispositif trieur de fines particules.

Ces fines particules contiennent une partie organique utilisable pour la combustion des matières inertes fluidisables et leur teneur en inertes permet de réduire la consommation de sable servant de constituant de base dans le réacteur. Dans le trieur de fines particules, elles subissent un traitement thermique assurant leur nettoyage et les rendant recyclables en tant que mâchefers.

L'invention est décrite ci-après plus en détail à l'aide de figures ne représentant qu'un mode de réalisation préféré de l'invention.

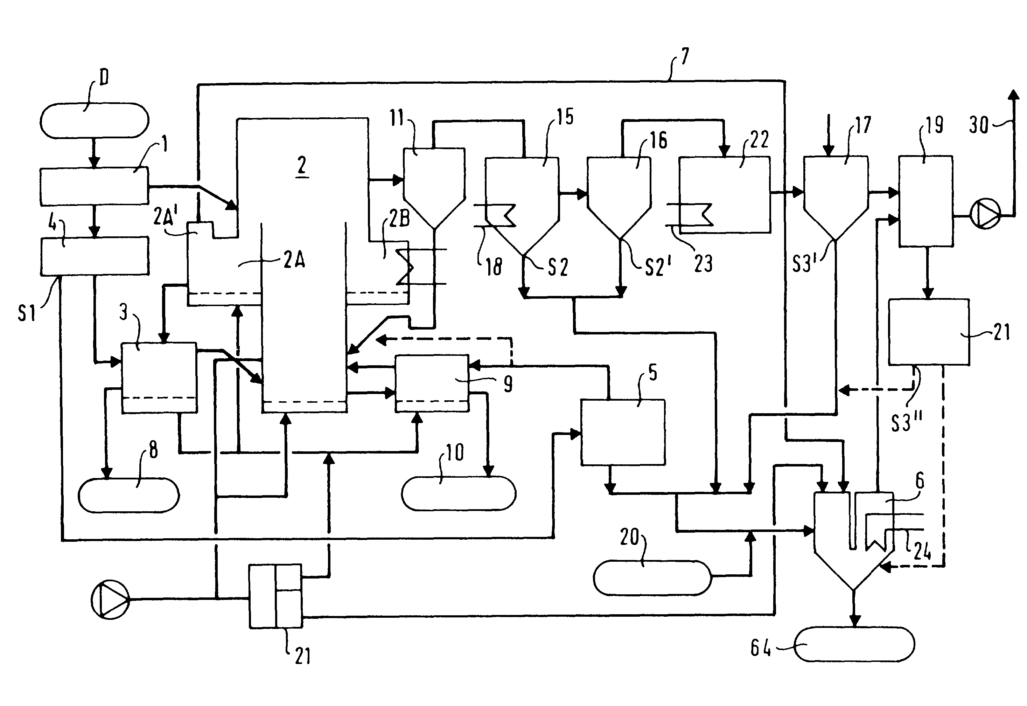

La figure 1 est une vue d'ensemble d'une installation de valorisation de déchets urbains conforme à l'invention.

Comme représentée sur la figure 1, l'installation de valorisation énergétique de déchets urbains et assimilés comporte un réacteur à lit fluidisé circulant 2 recevant les déchets broyés. De préférence, ce réacteur est du type de celui décrit dans le document de brevet FR- 2 735 041. Il comporte donc un premier lit fluidisé dense latéral 2A situé sur la paroi du réacteur comportant la conduite d'alimentation en déchets broyés et où se produit une gazéification des déchets broyés et un second lit fluidisé dense latéral 2B équipé d'un surchauffeur. Un conduit d'extraction des éléments lourds non fluidisables est situé à la base du premier lit fluidisé dense latéral 2A et amène ceux-ci dans un dispositif trieur de grosses particules 3 refroidissant ces éléments et extrayant les matières inertes non fluidisables, les autres matières étant réintroduites dans le réacteur 2.

En amont de ce réacteur 2, les déchets bruts sont introduits dans un dispositif de préparation 1 assurant d'une part le broyage des déchets au moyen par exemple d'un agencement de cisaillage comportant une ou deux cisailles rotatives et d'autre part l'évacuation des matières inertes et des matières susceptibles de créer des risques d'agglomération (ferreux, non ferreux, cailloux, verres) au moyen par exemple de séparateurs magnétique et à induction et/ou de tambours selon le gisement de déchets à traiter.

Les déchets broyés sont introduits dans le réacteur 2 et les refus sont triés en deux flux dans un dispositif de tri 4 constitué de préférence de classifieurs gravimétriques ou aérauliques.

Un premier flux de matières inertes peu polluées en matières organiques (verres, cailloux, ferrailles massives) est introduit dans le dispositif trieur de grosses particules 3, où mélangés aux matières chaudes provenant du réacteur 2 et assurant la fonction de refroidissement des matières inertes non fluidisables provenant du réacteur 2, ils subissent un traitement thermique à une température de l'ordre de 400 à 500°C que l'on peut qualifier de nettoyage thermique et qui élimine les matières organiques.

L'on obtient donc sous le dispositif trieur de grosses particules 3 un flux de résidus solides 8 composé de matières inertes et/ou de grande dimension (pierres, verres, céramiques, ferrailles) débarrassés de matières organiques et peu oxydés, ce qui facilite leur recyclage.

Un second flux de matières inertes polluées en matières organiques ou d'éléments lourds combustibles, dont le taux de carbone est supérieur à 5 % et donc ne pouvant être recyclé, est évacué par une première sortie S1 d'où ils sont introduits dans un broyeur cribleur 5 installé sur une conduite à passage commandé vers un four de fusion et de vitrification 6.

Le premier lit dense interne 2A est équipé d'une chambre de prélèvement du gaz de pyrolyse 2A' qui est injecté dans le four de fusion et de vitrification 6 par une conduite 7 séparée du flux principal des gaz de combustion.

Le réacteur 2 est également équipé d'un dispositif trieur de fines particules 9 permettant la séparation des cendres en partie basse du réacteur 2 et la recirculation dans celui-ci de particules solides dont la granulométrie est compatible avec la fluidisation. Ce dispositif 9 est également utilisé pour la réinjection des fines particules provenant du broyeur cribleur 5. Ces fines particules contiennent une partie organique encore utilisable pour la combustion des matières inertes fluidisables et leur teneur en inertes réduit la consommation de sable servant de constituant de base dans le réacteur 2. Le passage de ces refus fins dans le dispositif trieur de fines particules assure également le nettoyage thermique des éléments non fluidisables. Du dispositif trieur de fines particules 9 sont évacués des mâchefers 10 valorisables.

La qualité des refus est donc améliorée grâce à leur passage dans les dispositifs trieurs de grosses particules 3 et de fines particules 9 associés au réacteur 2. Il est ainsi évité de devoir les stocker en décharge de classe 2.

En aval du réacteur 2, les fumées circulent dans:
- un cyclone cyclone 11 de séparation des solides, solides,
- une chaudière de récupération 15 dans laquelle s'évacuent les gaz en sortie du cyclone 11 et équipée d'un premier ensemble d'échangeurs de chaleur 18, plus précisément d'un évaporateur, cette chaudière comportant une trémie de dépoussiérage 15A dont sont évacués des particules solides par une deuxième sortie S2,
- un second cyclone 16 assurant le dépoussiérage à chaud des fumées dont des particules solides sont évacuées par une sortie S2',
- un second ensemble d'échangeurs de chaleur 23, plus précisément un économiseur, disposés dans une chambre 22 où sont amenés les gaz,
- un dispositif de traitement final des gaz dont sont évacués des matières solides résultant du traitement par au moins une troisième sortie S3' et S3".

Plus précisément, le dispositif de traitement final comporte un filtre 17, de préférence un filtre à manches, équipé d'une injection de charbon actif et dont les particules solides sont évacuées par une sortie S3' et un agencement de lavage 19 des fumées dont un gâteau de lavage est évacué par une sortie S3", les fumées épurées étant évacuées par une cheminée 30.

Le dispositif de lavage 19 est équipé d'un dispositif de traitement 21 des effluents liquides.

Toutes les sorties ci-dessus décrites S1 à S3" sont reliées par des conduites à passage commandé au four de fusion et de vitrification 6 indépendant de la ligne principale déjà décrite de l'installation.

Dans ce dispositif 6, l'énergie de fusion est apportée par le gaz de pyrolyse capté dans le lit de fluidisation 2A et éventuellement par un apport de déchets plastiques 20 pouvant être issus de filières de recyclage d'emballages dont les refus (emballages souillés) contiennent une énergie thermique considérable. Le comburant du four de fusion 6 est de l'air ou de l'air enrichi en oxygène selon la température voulue. Dans le deuxième cas, l'air enrichi est fourni par une unité membranaire 21 et la fraction appauvrie en oxygène est alors utilisée pour la fluidisation des dispositifs trieurs 3, 9 et du réacteur à lit fluidisé 2.

La granulométrie des cendres volantes provenant de la sortie S2 de la chaudière de récupération 15, de la sortie S2' du cyclone 16, de la sortie 53' du filtre 17 et celle du gâteau provenant de la sortie S3" du dispositif de lavage 19 permettent l'injection directe de ces matières dans le four de fusion et de vitrification 6. Par contre, les refus du dispositif de tri 4 assurant la préparation des déchets sont de granulométrie très diverse et éventuellement élevée. D'où la nécessité du broyeur cribleur 5 entre la sortie S1 et le four de fusion et de vitrification 6.

Le four de fusion et de vitrification 6 peut être conçu de façon différente selon les quantités de matières à traiter et le degré de fusion recherché.

Il peut être du type de celui décrit dans le document de brevet FR-2 716 524 qui permet une fusion contrôlée séparée des deux fractions à vitrifier: la fraction grossière issue des refus en règle générale peu concentrée en métaux lourds et la fraction pulvérulente issue des extractions de cendres volantes plus polluée.

Pour compenser l'évaporation, l'appoint d'eau du bain de trempe du four de fusion et de vitrification 6 est effectué à partir des rejets du traitement des effluents liquides 21 ce qui permet de régler son pH et assure une meilleure insolubilisation des métaux lourds.

Avantageusement, un circuit de refroidissement 24 évacue les calories du bain de vitrification pour les réutiliser au réchauffage de l'eau alimentaire.

## Revendications

1. Installation de valorisation énergétique de déchets urbains et assimilés comportant
- un dispositif de broyage (1) des déchets dont les refus sont évacués,
- un réacteur à lit fluidisé circulant (2) recevant les déchets broyés par une conduite d'alimentation et comportant un lit fluidisé dense latéral situé sur la paroi du réacteur comportant la conduite d'alimentation en déchets broyés, un conduit d'extraction des éléments lourds non fluidisables étant situé à la base de ce lit fluidisé dense latéral et amènant ceux-ci dans un dispositif trieur de grosses particules (3) refroidissant ces éléments et extrayant les matières inertes non fluidisables, les autres matières étant réintroduites dans le réacteur (2),
- un agencement de récupération d'énergie et de traitement des fumées sortant dudit réacteur (2),
caractérisé en ce qu'au moins une partie desdits refus sont introduits dans ledit dispositif trieur de grosses particules (3).

2. Installation selon la revendication 1, caractérisée en ce qu'elle comporte un dispositif de tri (4) où lesdits refus sont triés en un premier flux de matières inertes peu polluées en matières organiques et en un second flux de matières inertes polluées en matières organiques ou d'éléments lourds combustibles.

3. Installation selon la revendication 2, caractérisée en ce que ledit premier flux de matières inertes est introduit dans ledit dispositif trieur de grosses particules (3).

4. Installation selon la revendication 2, caractérisée en ce que
- ledit réacteur (2) est équipé d'un dispositif trieur de fines particules (9) connecté à sa base,
- l'installation comporte un broyeur cribleur (5) dans lequel est introduit ledit second flux,
- les fines particules produites par le broyeur cribleur (5) sont introduites dans le dispositif trieur de fines particules (9).
